# EUROPEAN PATENT APPLICATION

(11) **EP 2 007 059 A1**
(43) Date of publication of application: **24.12.2008**
(21) Application number: 07012208.0
(22) Date of filing: 21.06.2007
(51) Int. Cl.: H04L 5/02

(54) **Method for data transmission, transmitter station, receiver station and communication system**

(71) Applicant: SIEMENS AKTIENGESELLSCHAFT, 80333 München (DE)
(72) Inventor: Farkas, Peter, Dr., 81105 Bratislava (SK); Gubka, Peter, 05306 Bijacovce (SK)

(57) **Abstract**

The present invention is related to a method for data transmission between at least one transmitter station and at least one receiver station of a multicarrier communication system, especially a wireless communication system,
wherein for the transmission of a data bit a signature comprising an at least two-dimensional spreading sequence is employed and wherein the spreading sequence is composed of multiple elementary hexagonal shaped slots. The present invention further relates to a transmitter station, a transmitter station and a communication system.

## Description

### FIELD OF THE INVENTION

The present invention is related to a method for data transmission between a transmitter station and a receiver station of a communication system, especially a wireless communication system. The present invention further relates to a transmitter station, a transmitter station and a communication system.

### TECHNICAL BACKGROUND OF THE INVENTION

Wireless communication systems - also known as radio communication systems - are well-known in the art. A wireless communication system refers to a communication system having a transmitting end and a receiving end in which signals are transmitted or communicated from the transmitting end to the receiving end via a signal path, wherein a portion of this signal path from the transmitting end to the receiving end includes signal transmission via a wireless interface. Therefore, in wireless communication systems, data (for example voice data, image data or other digital data) is transmitted by means of electro-magnetic waves via a wireless interface. This wireless interface is also known as radio interface.

For the access of a subscriber terminal, such as a mobile subscriber or a base station, in a radio communication system typically a multiple access method is carried out. Some modern radio communication systems of the so-called third generation use a Code Division Multiple Access Method or shortly CDMA. One representative of a CDMA system is the WCDMA system (Wideband CDMA). A member of this WCDMA system is the FDD component (FDD = Frequency Division Duplex) of the UMTS standards (UMTS = Universal Mobil Telecommunication System). In CDMA the information to be transmitted is coded by a spreading code which consists of a set of so-called slots or chips. The back-spreading within the receiving station is again carried out by multiplication with the spreading code. In the direct frequency CDMA method according to CDMA 2000 and WDCDMA the transmitted data bits are multiplied with the spreading code and are then transmitted subsequently in form of a series of slots. In [1] the usage of real one-dimensional complete complementary spreading codes is described for data transmission.

The present application is addressed to the problem of the efficient use of basic communication resources such as frequency, time, space, etc. in modern communication systems such as the ones described above. This is highly importance especially in wireless communication systems, but also in other communication systems. Hereinafter, the present invention and its underlying problem are therefore described with regard to a wireless communication system and especially with regard to a CDMA system, whereas it should be noted that the present application is not restricted to this kind of communication systems but can also be used for other kinds of communication systems such as broad-band communication systems.

One technique which has become important recently is the so-called multicarrier transmission which is also known as "Discrete Multitone" (DMT) transmission or "Orthogonal Frequency Division Multiplexing" (OFDM). Systems employing these techniques for data transmission by means of multicarrier transmission use a large number of carrier frequencies, in which case the data stream to be transmitted is broken down for data transmission into a large number of parallel stream elements, which are transmitted independently of one another using Frequency Division Multiplexing (FDM), Time Division Multiplexing (TDM) and/or Code Division Multiplexing (CDM). These different stream elements are also referred to as individual carriers, whereas for the transmission of the different electro-magnetic waves characteristical carrier frequencies which are arranged within the frequency band of the corresponding communication system are employed. Typically, modern telecommunication systems employ multiple carrier frequencies.

Usually the specific (elementary) interval in time and frequency used for data communication in a multicarrier based communication system is denoted as slot. The corresponding transmission is denoted as slot-based communication. Whereas conventional communication systems, such as the one described in [1], employ one-dimensional spreading code sequences and thus slots in a one-dimensional plane, modern communication systems more and more use sophisticated slot structures. In [2], [3] a communication system employing so-called two-dimensional "Complete Complementary Codes" (CCC) is described. In these communication systems substantially rectangular slots are used for the spreading code sequences. Other communications systems having two-dimensional spreading sequences and the shift technique are described in [4], [5].

The present invention is based on the object to improve the efficiency, especially with regard to frequency and time, within a multicarrier communication system.

### SUMMARY OF THE INVENTION

In accordance with the present invention, a method having the features of claim 1 and/or a transmitter station having the features of claim 17 and/or a receiver station having the features of claim 18 and/or a communication system having the features of claim 19 is/are provided.

### Accordingly, it is provided:

A method for data transmission between at least one transmitter station and at least one receiver station of a multicarrier communication system, especially a wireless communication system, wherein for the transmission of a data bit a signature comprising an at least two-dimensional spreading sequence is employed and wherein the spreading sequence is composed of multiple elementary hexagonal shaped slots.

A transmitter station for data transmission using a transmitter of a communication system capable to perform a method according to the present invention.

A receiver station for data transmission using a receiver of a communication system capable to perform a method according to the present invention.

A communication system, especially a radio communication system, comprising at least one transmitter station and at least one receiver station capable to establish a communication with each other via an interface, especially a radio interface, wherein at least one of the transmitter stations is a transmitter station according to the present invention and/or wherein at least one of the receiver stations is a receiver station according to the present invention.

The present invention is based on the conclusion that instead of rectangular shaped slots also other slot shapes may be applicable. The present invention now provides a novel transmission technique of a multicarrier communication system based on the usage of hexagonal spreading codes (so called "signatures") composed of hexagonal shaped elements (so called "chips" or "slots").

It has surprisingly turned out that these hexagonal slots can be used for the data transmission with significantly better efficiency with regard to spectrum, time and space (i.e. communication space) than rectangular slots in the two-dimensional plane. Therefore, the main advantage of the provision of these hexagonal spreading sequences according to the present invention is the fact, that a very effective information transmission can be established.

It has further turned out that the orientation of the hexagonal slots in the plane is not important and could be suitable selected considering the relevant technical requirements.

So far these hexagonal slots are only used for the Crest factor reduction (PAR = peak to average reduction) within an OFDM communication systems, but not for the data transmission since it is assumed so far that in multicarrier based communication systems employing two-dimensional spreading sequences rectangular-shaped or square-shaped slots are sufficient and show an optimal transmission efficiency.

The present invention provides different hexagonal signatures with different sizes of the hexagonal slots and different auto-correlation and cross-correlation properties. Between them there are, however, some outstanding sets of hexagonal signatures, which have nearly ideal cross- and auto-correlation properties. These sets employ e.g. two-dimensional "Complete Complementary Codes" (CCC) as described in [2] and [3].

Another basic advantage of the present invention is the fact that a greater number of hexagonal slots can be accommodated within a plane having a fixed area than rectangular slots. In such a way the same processing gain could be obtained by more efficient use of the communication space if a multicarrier communication system is based on hexagonal spreading signatures instead of corresponding square or rectangular signatures.

Another improvement of the present invention is the fact that ideal cross- and auto-correlation properties in the two-dimensional plane for all shifts in any of the three directions can be achieved. To get ideal cross- and auto-correlation properties it is only necessary to compose the signatures out of multiple sets of elementary hexagonal slots and transmit these sets in different planes. These additional planes can be obtained by using space dimension realized by MIMO (MIMO = multiple input multiple output) or via technique such as described in [5]. This also called Macro TDMA and Macro FDMA.

A further advantage of the invention is that in one embodiment the rate adaptation problem typically known from UMTS, where OVSF codes are used, could be solved rather simple by not using all shifts or overlaps for the transmission of data.

Advantages, embodiments and further developments of the present invention can be found in the further subclaims and in the following description, referring to the drawings.

According to a preferred embodiment of the invention complete complementary codes (CCC) are employed for the signatures. This embodiment represents a particular and very advantageous improvement of the efficiency. These "Complete Complementary Hexagonal Code" signatures have the property that the cross-correlation for all sets is zero for any shift in 3 directions and the auto-correlation is zero for all non-zero shifts. This property further allows that the sets overlap in each plane in the same way and for each overlap a one-data-bit could be transmitted.

According to a preferred embodiment of the invention the two-dimensional spreading sequence is arranged in at least one plane and especially in the time-frequency plane and wherein a slot is defined as a specific, elementary interval in time and frequency.

According to a preferred embodiment of the invention a given number of hexagonal shaped slots form a set and wherein one set is used which is transmitted in one plane. Thus, it may be possible to use only one set of elements (in one plane) for the spreading codes. However, in this case non-ideal auto- and cross-correlation properties are obtained.

According to a preferred embodiment of the invention a given number of hexagonal shaped slots form a set and wherein a given amount of sets are used which are transmitted in a corresponding amount of planes.

According to a preferred embodiment of the invention the communication system is a MIMO communication system and wherein the amount of planes are obtained by employing a space dimension technique.

According to a preferred embodiment of the invention the different sets in the different plane are shifted in at least one direction of the corresponding plane such that only some but not all of the hexagonal shaped slots overlap each other in the different planes and wherein for any shift of the sets one data bit could be transmitted.

According to a preferred embodiment of the invention the different sets overlap in the different planes similarly such, that always corresponding hexagonal shaped slots overlap each other in the different planes.

According to a preferred embodiment of the invention all signatures have the property that the cross-correlation and the auto-correlation shifts for all sets is zero for any shift in the at least one direction.

According to a preferred embodiment of the invention the hexagonal slots are arranged in a high density arrangement.

According to a preferred embodiment of the invention for data transmission Orthogonal Frequency Division Multiplex (OFDM) is applied to send the transmit signal.

According to a preferred embodiment of the invention for data transmission Code Division Multiple Access (CDMA) and/or Frequency Division Multiple Access (FDMA) and/or Time Division Multiple Access (TDMA) is applied to send the transmit signal.

According to a preferred embodiment of the invention the method is applied to a MIMO communication system.

According to a preferred embodiment of the invention the data transmission is symbol-based using at least one data symbol for transmitting the data wherein each symbol is composed of a number of slots.

According to a preferred embodiment of the invention the method is applicable for 3G LTE, WIMAX, UMTS and/or 4G. communication systems.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1A: a first preferred embodiment of a complete complementary hexagonal spreading code composed of 4 elements each having 7 elementary slots;
- Fig. 1B: the partial aperiodic autocorrelation of the complementary hexagonal code in Fig. 1A;
- Fig 1C: a resulting aperiodic autocorrelation of the auto-correlated complementary hexagonal code of Fig. 1B;
- Fig. 2A: a second preferred embodiment of a complete complementary hexagonal spreading code composed of 4 elements each having 7 elementary slots;
- Fig. 2B: the partial aperiodic autocorrelation of the complementary hexagonal code in Fig. 2A;
- Fig 2C: the resulting aperiodic autocorrelation of the autocorrelated complementary hexagonal code of Fig. 2B;
- Fig. 3A: a first complete complementary hexagonal code (first user signature) such as the one shown in Fig. 1a;
- Fig. 3B: a second complete complementary hexagonal code (second user signature) such as the one shown in Fig. 2A;
- Fig. 3C: the partial aperiodic cross-correlation of the complementary hexagonal codes of Fig. 3A and 3B;
- Fig 3D: the resulting aperiodic cross-correlation of the cross-correlated hexagonal code of Fig. 3C;
- Fig. 4: an illustration of an overlap of two signatures in 4 planes;
- Fig. 5: a block diagram illustrating the structure of a radio communication system in which the present invention may be implemented.

In all figures of the drawings elements, features and signals which are the same or at least have the same functionality have been provided with the same reference symbols, unless explicitly stated otherwise.

### DETAILED DESCRIPTION OF PREFERRED EMBODIMENTS OF THE PRESENT INVENTION

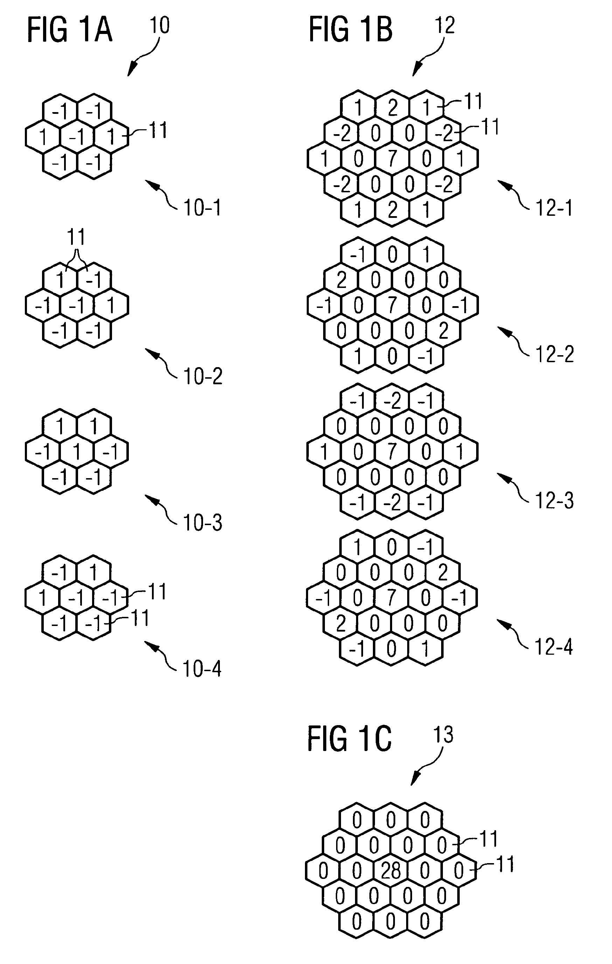

Fig. 1A shows a first preferred and very advantageous embodiment of a multicarrier CDMA user signature based on ideal Complete Complementary Hexagonal Codes. The hexagonal spreading code in Fig. 1A is usable for a data communication of 1 data bit in 4 time-frequency planes. The spreading code is composed of 4 different elements whereas each element is denoted by reference symbol 10. Each element 10 comprises a code matrix comprising 7 elementary slots 11. Each element 10 is arranged within a different plane of the four time-frequency planes. Each one of these elements 10 forms a set whereas each one of these sets comprises the seven elementary slots 11.

The special feature of the present invention is now that each one of these slots 11 is hexagonal shaped and all of the 7 elementary hexagonal shaped slots 11 are arranged closely together and form a high density packed slot arrangement. The four elements 10 and thus their slots 11 have the following content:
Element 10-1:
   [-1, -1; 1, -1, 1; -1, -1.]
Element 10-2:
   [1, -1; -1, -1, 1; -1, -1.]
Element 10-3:
   [1, 1; -1, 1, -1; -1, -1.]
Element 10-4:
   [-1, 1; 1, -1, -1; -1, -1.]

Fig. 1B shows the elements 12 gained by partial aperiodic auto-correlation of the elements 10 of the complementary hexagonal code in Fig. 1A. The four partial aperiodic auto-correlation elements 12 and thus their slots 11 have the following content:
Element 12-1:
   [1, 2, 1; -2, 0, 0, -2; 1, 0, 7, 0, 1; -2, 0, 0, -2; 1, 2, 1]
Element 12-2:
   [-1, 0, 1; 2, 0, 0, 0; -1, 0, 7, 0, -1; 0, 0, 0, 2; 1, 0, 1]
Element 10-3:
   [-1, -2, -1; 0, 0, 0, 0; 1, 0, 7, 0, 1; 0, 0, 0, 0; -1, -2, - 1]
Element 10-4:
   [1, 0, -1; 0, 0, 0, 2; -1, 0, 7, 0, -1; 2, 0, 0, 0; -1, 0, 1]

Fig 1c shows the resulting aperiodic autocorrelation 13 of the 4 elements 12 of Fig. 1B, i.e. the sum of the four elements 12-1 and 12-4.

The resulting aperiodic autocorrelation 13 has the content:
[0, 0, 0; 0, 0, 0, 2; 0, 0, 28, 0, 0; 0, 0, 0, 0; 0, 0, 0.]

The signature shown in Fig. 1A - 1C has the property that the corresponding cross-correlation for all pairs is zero for any shift in 3 directions and the auto-correlation is zero for all non-zero shifts as well. The auto-correlation method of a spreading code is well described e.g. in the documents [1], [2], [3] and, thus, is not described herein in more detail.

This property allows that the sets overlap in each plane in the same way and for each overlap of shift a one-data-bit can be transmitted.

The auto-correlation and cross-correlation of a spreading code matrix or vector is well described e.g. in the documents [1], [2], [3] and, thus, is not described herein in more detail. However, the contents of these documents [1], [2], [3] are fully incorporated by referenced especially with regard to the auto-correlation and cross-correlation of a spreading code as well with regard to the structure of Complete Complementary Codes.

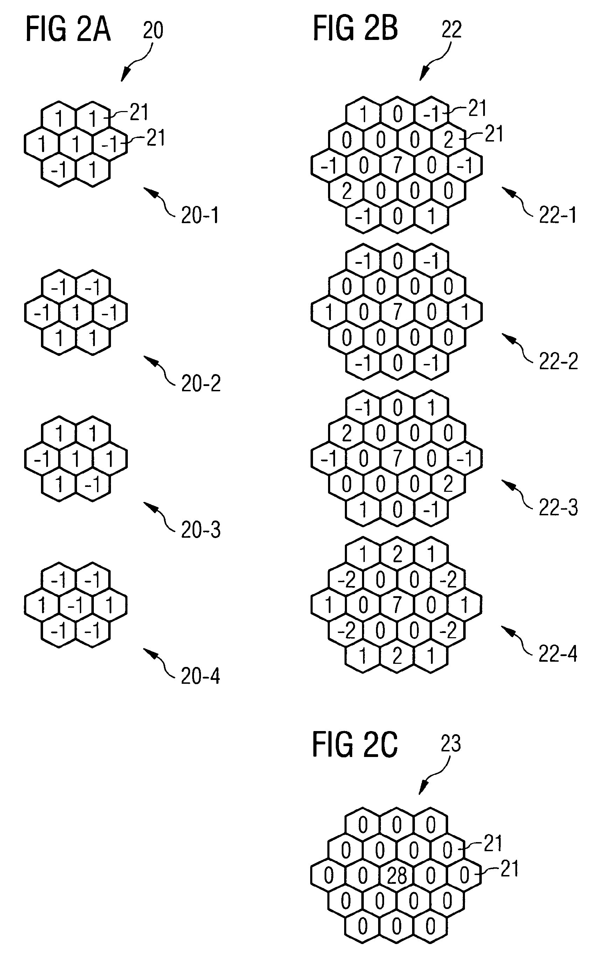

Fig. 2A shows a second preferred embodiment of a complete complementary hexagonal spreading code composed of 4 elements 20 each having 7 elementary slots 21. The four elements 20 and thus their slots 21 have the following content:
Element 20-1:
   [1, 1; 1, 1, -1; -1, 1.]
Element 20-2:
   [-1, -1; -1, 1, -1; 1, 1.]
Element 20-3:
   [1, 1; -1, 1, 1; 1, -1.]
Element 20-4:
   [-1, -1; 1, -1, 1; -1, -1.]

Fig. 2B shows the elements 22 gained by partial aperiodic autocorrelation of the elements 20 of the complementary hexagonal code in Fig. 2A. The four partial aperiodic auto-correlation elements 22 and thus their slots 21 have the following content:
Element 22-1:
   [1, 2, -1; 0, 0, 0, 2; -1, 0, 7, 0, -1; 2, 0, 0, 0; -1, 0, 1]
Element 22-2:
   [-1, 0, -1; 0, 0, 0; 1, 0, 7, 0, 1; 0, 0, 0, 0; -1, 0, -1]
Element 22-3:
   [-1, 0, 1; 2, 0, 0, 0; -1, 0, 7, 0, -1; 0, 0, 0, 2; 1, 0, 1]
Element 22-4:
   [1, 2, -1; -2, 0, 0, -2; 1, 0, 7, 0, 1; -2, 0, 0, -2; 1, 2, 1]

Fig 2c shows the resulting aperiodic autocorrelation 23 of the auto-correlated complementary hexagonal code of Fig. 1B. The resulting aperiodic autocorrelation 13 offers the same content as the one shown in Fig. 1C.

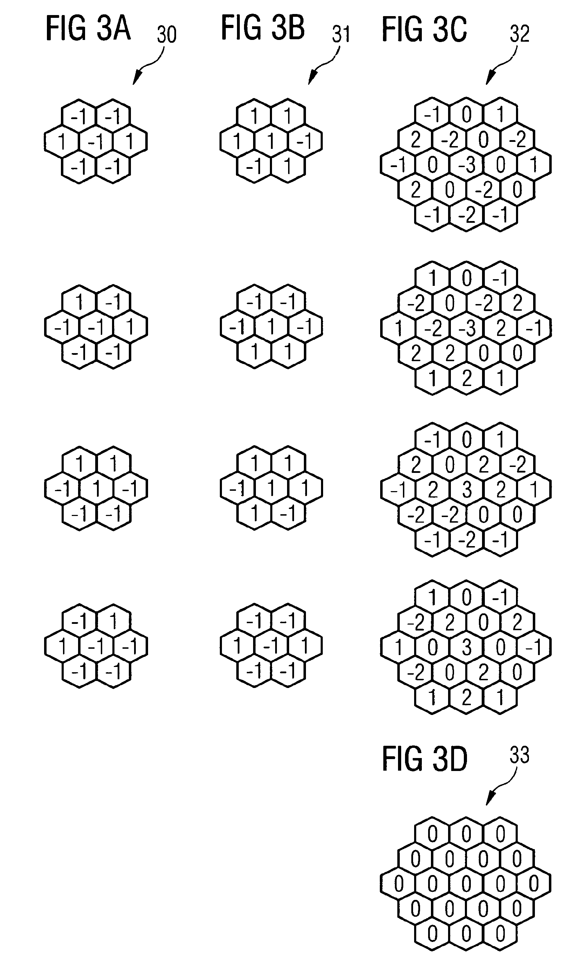

Fig. 3A and 3B show the elements 30, 31 of a first and a second complete complementary hexagonal code such as the one shown in Fig. 1A and 2A, respectively. Fig. 3C shows the four element 32 gained by partial aperiodic cross-correlation of the complementary hexagonal codes 31, 31 of Fig. 3A, 3B. The four partial aperiodic cross-correlation elements 32 have the following content:
Element 32-1:
   [-1, 0, 1; 2,-2, 0,-2; -1, 0, -3, 0, 1; 2, 0, -2, 0; -1, -2, -1]
Element 32-2:
   [1, 0, -1; -2, 0, -2, 2; 1, -2, -3, 2, -1; 2, 2, 0, 0; 1, 2, 1]
Element 32-3:
   [-1, 0, 1; 2, 0, 2, -2; -1, 2, 3, 2, 1; -2, -2, 0, 0; -1, -2, -1]
Element 32-4:
   [1, 0, -1; -2, 2, 0, 2; 1, 0, 3, 0, -1; -2, 0 2, 0; 1, 2, 1]

Fig 3D shows the resulting aperiodic cross-correlation 33 of the cross-correlated hexagonal code of Fig. 3C having the content (i.e. zero):
[0, 0, 0; 0, 0, 0, 0; 0, 0, 0, 0, 0; 0, 0, 0, 0; 0, 0, 0]

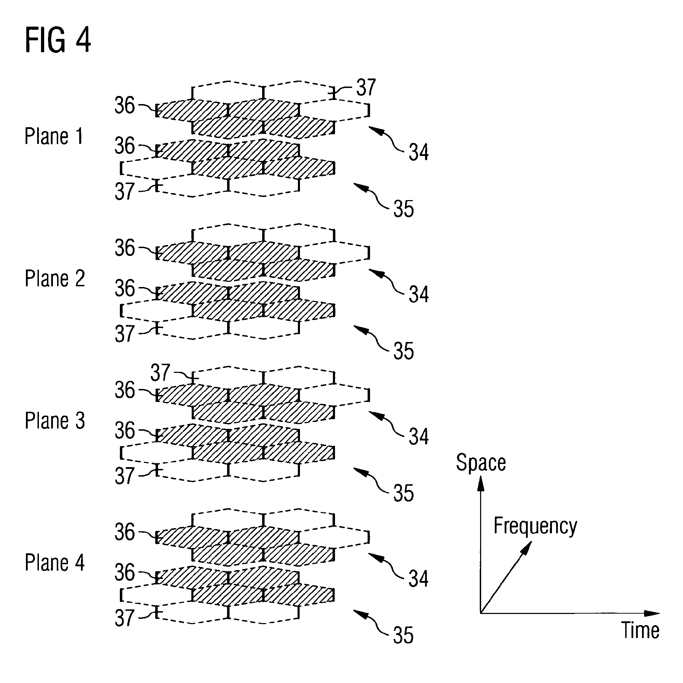

Fig. 4 shows several illustration of an exemplary overlap of two signatures 34, 35 in 4 planes. Here, each overlap 36 (grey slots) comprises 4 interconnected slots 37. It has be turned out that for both signatures 34, 35 the cross-correlation for all sets is zero.

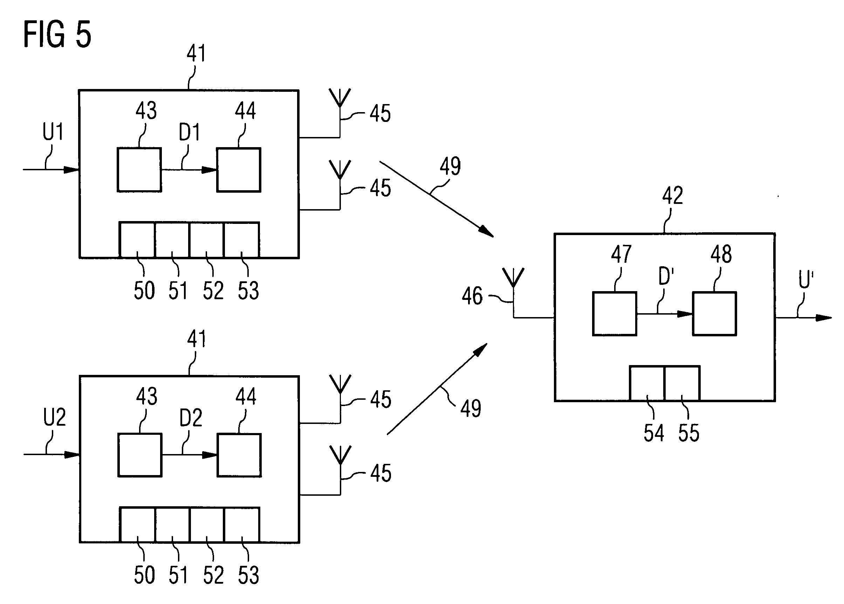

Fig. 5 shows the structure of a radio communication system in which the present invention such as described above may be used.

The radio communication system in figure 5 is denoted by reference symbol 40. This radio communication system 40 may be, by way of example, a universal mobile telecommunication system (UMTS) or a global system for mobile communication (GSM), but the invention shall not be restricted to such radio communication systems. In the example of figure 5, the radio communication system 40 includes two transmitters 41 and one receiver 42. The transmitters 41 and the receiver 42 can be assigned both to a base station and to a mobile station. A respective transmitter 41 comprises a coder 43, a modulator 44 and one or more transmission antennas 45. The receiver 42 comprises one or more reception antennas 46, a demodulator 47, and a decoding device 48. Consequently, at least two transmission channels 49 are produced between the two transmitters 41 and the receiver 42.

A respective coder 43 which is, for example, a turbo-coder, receives a digital input signal U1, U2 in the form of a sequence of data symbols (bit stream). These input signals U1, U2 carry, by way of example, a voice message to be transmitted. The respective coder 43 adds e. g. a redundancy for error protection coding to the digital input signal U1, U2. An error protection coded data signal D1, D2 is present at the output of each one of the coders 43 and, then, (in a manner that is not illustrated in Fig. 5) is interleaved and subdivided into blocks having a predetermined length. A respective modulator 44 modulates the data signal onto a carrier signal that (likewise in a manner that is also not illustrated in Fig. 5) is spectrally shaped by a transmission filter and amplified by transmission amplifier before it is transmitted as a radio signal using the respective antennas 45.

The reception antenna 46 receives the transmitted radio signal D' and feeds it to the input of the demodulator 47. In the simplest case, the demodulator 47 within the receiver 42 includes a radio frequency stage that receives the radio signal D' received through the reception antenna 46 and converts it in a costmary manner by down-conversion into an analogue reception signal U'. The analogue reception signal U' is then digitalised by an analogue/digital converter (AD-converter) with a sufficiently high sampling frequency and, if appropriate, bandwidth-limited by a digital filter connected downstream to the AD-converter.

In a communication system with MIMO characteristics using multiple antennas, the communication system may use highly correlated MIMO channels to carry the data signals.

The present invention maybe now implemented within the transmitter and/or the receiver. For this task, the transmitter and receiver, respectively, comprise suitable means which are described hereinafter.

For example a transmitter 41 is designed for sending data bits to the corresponding receiver 42 in a radio communication system. This transmitter 41 comprises means 50 for transferring each data bit in different planes, and means 51 for spreading these data bits such that each data bit is multiplied using in each case a code matrix as described above. Further, this transmitter 41 comprises means 42 for transferring each data bit according to the used spreading code. Further, a transmitter 41 may comprise means 53 for the determination or calculation of several code matrixes out of one-dimensional or two- and more dimensional complete complementary spreading codes.

The receiver 42 is designed to process data bits received from the transmitter 41 via the wireless channels. The receiver 42 comprises means 54 for calculating correlations between the received set which comprise the spreading data bits and the relevant coding matrixes which are implemented in the transmitter 41. Further the receiver 42 comprises means 55 for calculating the sums of the correlation results.

While embodiments and applications of this invention have been shown and described above, it should be apparent to those skilled in the art, that many more modifications (than mentioned above) are possible without departing from the inventive concept described herein. The invention, therefore, is not restricted except in the spirit of the appending claims.

It is therefore intended that the foregoing detailed description is to be regarded as illustrative rather than limiting and that it is understood that it is the following claims including all equivalents described in these claims that are intended to define the spirit and the scope of this invention. Nor is anything in the foregoing description intended to disavow the scope of the invention as claimed or any equivalents thereof.

The hexagonal spreading sequences can can be very fruitfully implemented in all wireless communication systems such as a 3G LTE system, WIMAX system, 4G (Winner system), UMTS, etc. Radio communication systems are especially any mobile radio system, for example in accordance with the commonly known GSM standard or the UMTS standard. Future mobile radio communication systems, for example of the fourth generation, as well as ad hoc networks, are also to be understood as radio communication systems. Radio communication systems are, for example, also WLANs (Wireless Local Area Networks) as well as Bluetooth networks and broadband networks with wireless access.

However, the present invention is explicitly not limited to a wireless communication system but can advantageously also be used in any communication system, especially in a hardwired communication systems.

A mobile station is, for example a user equipment, especially, a mobile telephone or a mobile or fixed device for transmission of image and/or sound data, for fax services, for short message services (SMS), for multimedia messaging service (MMS) and/or e-mail transmission and/or for internet access.

A base station is a network-side station which is designed to receive the user data and/or signalling data from at least one user equipment and/or is designed to send user data and/or signalling data to the corresponding user equipment. The base station is typically coupled via network-side devices to a core network, via which connections are made to other radio communication systems in other networks.

### List of used literature

[1] Chen H. H., Yeh J. F., Suehiro N., "A multicarrier CDMA architecture based on orthogonal complete complementary codes for new generations of wideband wireless communications," IEEE Communications magazine, vol. 39, October 2001, pp. 126-134.
[2] European Patent EP 1 618 689 B1.
[3] European Patent Application EP 1 476 674 A1.
[4] Suehiro N., Hatori M., "N-Shift cross orthogonal sequences," IEEB Trans. Info. Theory, vol. IT-34, no. 1, Jan. 1988, pp.143-146.
[5] Turcsany M., Farkas P., "New 2D-multicarrier-DS-SS-CDMA techniques based on two-dimensional orthogonal complementary codes," In Fazel K,. Kaiserr S. (eds) Multi-carrier spread spectrum, Kluwer, 2004, pp. 49-56.

### List of used reference symbols

- 10, 10⁻¹ - 10⁻⁴: elements of the spreading code, sets
- 11: elementary hexagonal shaped slots
- 12, 12⁻¹ - 12⁻⁴: elements gained by partial aperiodic auto-correlation, sets
- 13: resulting element
- 20, 20⁻¹ - 20⁻⁴: elements of the spreading code, sets
- 21: slots
- 22, 22⁻¹ - 22⁻⁴: elements gains by partial aperiodic auto-correlation, sets
- 23: resulting element
- 30, 31: elements of a complete complementary hexagonal code
- 32: elements gained by partial aperiodic cross-correlation
- 33: resulting element
- 34, 35: sinatures in different planes
- 36: overlap, overlapping slots
- 37: slots
- 40: radio communication system
- 41: transmitter
- 42: receiver
- 43: coder
- 44: modulator
- 45: transmission antenna
- 46: reception antenna
- 47: demodulator
- 48: decoding device
- 49: transmission channels
- 50 - 53: means within the transmitter
- 54, 55: means within the receiver
- D1, D2: transmit data signal
- D': received data signal
- U1, U2: digital input signals
- U': output signal

## Claims

1. Method for data transmission between at least one transmitter station and at least one receiver station of a multi-carrier communication system, especially a wireless communication system,
wherein for the transmission of a data bit a signature comprising an at least two-dimensional spreading sequence is employed and wherein the spreading sequence is composed of multiple elementary hexagonal shaped slots.

2. Method according claim 1,
wherein complete complementary codes (CCC) are employed for the signatures.

3. Method according to any of the preceding claims,
wherein the two-dimensional spreading sequence is arranged in at least one plane and especially in the time-frequency plane and wherein a slot is defined as a specific, elementary interval in time and frequency.

4. Method according to any of the preceding claims,
wherein a given number of hexagonal shaped slots form a set and wherein one set is used which is transmitted in one plane.

5. Method according to any of the claims 1 - 3,
wherein a given number of hexagonal shaped slots form a set and wherein a given amount of sets are used which are transmitted in a corresponding amount of planes.

6. Method according to claim 5,
wherein the communication system is a MIMO communication system and wherein the amount of planes are obtained by employing a space dimension technique.

7. Method according to any of the claims 3 - 6,
wherein the different sets in the different plane are shifted in at least one direction of the corresponding plane such that only some but not all of the hexagonal shaped slots overlap each other in the different planes and wherein for any shift of the sets one data bit could be transmitted.

8. Method according to claim 7,
wherein the different sets overlap in the different planes similarly such, that always corresponding hexagonal shaped slots overlap each other in the different planes.

9. Method according to claims 7 or 8,
wherein all signatures have the property that the cross-correlation and the auto-correlation shifts for all sets is zero for any shift in the at least one direction.

10. Method according to any of the preceding claims,
wherein the hexagonal slots are arranged in a high density arrangement.

11. Method according to any of the preceding claims,
wherein for data transmission Orthogonal Frequency Division Multiplex (OFDM) is applied to send the transmit signal.

12. Method according to any of the preceding claims,
wherein for data transmission Code Division Multiple Access (CDMA) and/or Frequency Division Multiple Access (FDMA) and/or Time Division Multiple Access (TDMA) is applied to send the transmit signal.

13. Method according to any of the preceding claims,
wherein the method is applied to a MIMO communication system.

14. Method according to any of the preceding claims,
wherein the data transmission is symbol-based using at least one data symbol for transmitting the data wherein each symbol is composed of a number of slots.

15. Method according to any of the preceding claims,
wherein the method is applicable for 3G LTE, WIMAX, UMTS and/or 4G communication systems.

16. Transmitter station for data transmission using a transmitter of a communication system capable to perform a method according to any one of the preceding claims.

17. Receiver station for data transmission using a receiver of a communication system capable to perform a method according to any one of the claims 1 - 16.

18. Communication system, especially a radio communication system, comprising at least one transmitter station and at least one receiver station capable to establish a communication with each other via an interface, especially a radio interface, wherein at least one of the transmitter stations is a transmitter station according to claim 16 and/or wherein at least one of the receiver stations is a receiver station according to claim 17.
